# EUROPEAN PATENT SPECIFICATION

(11) **EP 3 473 657 B1**
(45) Date of publication and mention of the grant of the patent: **15.04.2020**
(21) Application number: 17197165.8
(22) Date of filing: 18.10.2017
(51) Int. Cl.: C08G 59/56, C08G 59/54, C09D 163/00

(54) **EPOXY RESIN FOR TIN SOLDER REPLACEMENT**
EPOXIDHARZ FÜR ZINNLOTERSATZ
RÉSINE ÉPOXY POUR LE REMPLACEMENT DE SOUDURE D'ÉTAIN

(43) Date of publication of application: 24.04.2019
(73) Proprietor: 3M Innovative Properties Company, Saint Paul, MN 55133-3427 (US)
(72) Inventor: Elgimiabi, Sohaib, 40629 Düsseldorf (DE)
(74) Representative: Müller, Bruno

(56) References cited:
- EP-A1- 0 838 499
- EP-A1- 1 695 990
- WO-A1-2013/159279

## Description

### Technical Field

The disclosure relates to curable two-part epoxy coating compositions. Further, the present disclosure further relates to a method for providing coated surfaces. Moreover, the present disclosure further relates to a use of the coating compositions for repairing defects in vehicle bodies.

### Background

Usually, car bodies comprise steel or steel sheets. After impact during accidents, the irregularities on outer surfaces need to be smoothed out in order to restore the previous outer appearance. This has been generally carried out in body shops and other repair facilities. The most successful and most widespread method for smoothing out irregularities on outer steel sheets of car bodies included the application of tin solder. Tin solder offers many advantages for these kind of repair operations, such as having a density close to steel, which means it is able to form a compact area. Furthermore, it is absolutely waterproof, thereby preventing corrosion of the steel sheet, which is considered particularly advantageous in the art. EP 0 838 499 discloses a two part low density epoxy resin composition that is useful as a void filler for aerospace applications. It comprises an epoxide compound, a diamine hardener, silica filler and hollow microspheres.

However, tin solder materials in most cases contain lead. Lead has the effect of vastly improved processability of tin alloys, which is a prerequisite for the above-described repair operations of steel sheets. Lead-free tin solder materials are extremely difficult to process. While the use of lead-containing tin solder materials was not considered problematic for a long time, in the EU this has changed recently due to environmental and safety considerations. The European Union Guideline II 200/53/EG prohibits the use of tin solders which contain lead metal. Moreover, new steel types such as hardened steel recently introduced into the automotive industry are sensitive to exposure to heat exposure like that evolved in the soldering processes involving the traditional tin solder. In these processes, temperatures in the range from 190 to 250 °C are involved, which may damage or at least alter the properties of new types of hardened steel recently introduced in the automotive industry.

For these reasons, there exists desire from the automotive industry for a material capable of replacing tin solder in repair processes. In general, it is desirable that such a material is resistant to ageing and environmental impacts.

### Summary

The present disclosure provides a curable coating composition precursor, comprising
(a) a first part (A) comprising:
   (i) at least one diamine in an amount of from 10 to 50 wt.-% based on the total weight of part (A) ;
   (ii) at least one amine epoxy hardener based on an phenolic lipid in an amount of from 10 to 50 wt.-% based on the total weight of part (A);
   (iii) at least one inorganic filler material in an amount of from 10 to 60 wt.-% based on the total amount of part (A);
(b)a second part (B) comprising:
   (i) at least one first epoxy resin in an amount of from 15 to 60 wt.-% based on the total amount of part (B);
   (ii) at least one second epoxy-based resin distinct from the first epoxy resin in an amount of from 15 to 60 wt.-% based on the total amount of part (B);
   (iii) at least one epoxy-reactive flexibilizer in an amount of from 0.1 to 10 wt.-% based on the total amount of part (B);
   (iv) at least one inorganic filler material 5 to 50 wt.-%, preferably from 10 to 45 wt.-%, more preferably from 15 to 40 wt.-% b based on the total amount of part (B).

The present disclosure further provides a method of providing a coated surface, the method comprising the following steps:
(a) Providing a curable coating composition precursor according to the present disclosure,
(b) Combining parts (A) and (B) of the curable coating composition precursor so as to form a curable composition;
(c) Applying the curable composition to at least part of the surface of at least one substrate; Allowing the curable composition to cure.

Furthermore, the present disclosure relates to the use of the curable coating composition precursor according to the present disclosure for repairing defects in vehicle bodies, preferably car bodies.

### Detailed Description

Before any embodiments of this disclosure are explained in detail, it is to be understood that the disclosure is not limited in its application to the details of construction and the arrangement of components set forth in the following description. The invention is capable of other embodiments and of being practiced or of being carried out in various ways. As used herein, the term "a", "an", and "the" are used interchangeably and mean one or more; and "and/or" is used to indicate one or both stated cases may occur, for example A and/or B includes, (A and B) and (A or B). Also herein, recitation of ranges by endpoints includes all numbers subsumed within that range (e.g., 1 to 10 includes 1.4, 1.9, 2.33, 5.75, 9.98, etc.). Also herein, recitation of "at least one" includes all numbers of one and greater (e.g., at least 2, at least 4, at least 6, at least 8, at least 10, at least 25, at least 50, at least 100, etc.). Also, it is to be understood that the phraseology and terminology used herein is for the purpose of description and should not be regarded as limiting. Contrary to the use of "consisting", which is meant to be limiting, the use of "including," "containing", "comprising," or "having" and variations thereof is meant to be not limiting and to encompass the items listed thereafter as well as additional items.

Amounts of ingredients of a composition may be indicated by % by weight (or "% wt". or "wt.-%") unless specified otherwise. The amounts of all ingredients gives 100 % wt unless specified otherwise. If the amounts of ingredients is identified by % mole the amount of all ingredients gives 100% mole unless specified otherwise.

In the context of the present disclosure, the terms "room temperature" and "ambient temperature" are used interchangeably and refer to a temperature of 23 °C (± 2 °C) at ambient pressure condition of about 101 kPa.

Unless explicitly stated otherwise, all embodiments and optional features of the present disclosure can be combined freely.

The first aspect of the present disclosure is a curable coating composition precursor, comprising
(a) a first part (A) comprising:
   (i) at least one diamine in an amount of from 10 to 50 wt.-% based on the total weight of part (A) ;
   (ii) at least one amine epoxy hardener based on an phenolic lipid in an amount of from 10 to 50 wt.-% based on the total weight of part (A);
   (iii) at least one inorganic filler material in an amount of from 10 to 60 wt.-% based on the total amount of part (A);
(b)a second part (B) comprising:
   (i) at least one first epoxy resin in an amount of from 15 to 60 wt.-% based on the total amount of part (B);
   (ii) at least one second epoxy-based resin distinct from the first epoxy resin in an amount of from 15 to 60 wt.-% based on the total amount of part (B);
   (iii) at least one epoxy-reactive flexibilizer in an amount of from 0.1 to 10 wt.-% based on the total amount of part (B);
   (iv) at least one inorganic filler material 5 to 50 wt.-%, preferably from 10 to 45 wt.-%, more preferably from 15 to 40 wt.-% b based on the total amount of part (B).

Curable coating composition precursors as the one according to the present disclosure are also known as 2-component compositions or 2k-compositions. It is understood that the first part (A) is physically separated from the second part (B) of the curable coating composition precursor. The first part (A) and second part (B) are mixed before the intended use according to the user's needs so as to obtain a curable composition. The present disclosure also covers a curable composition, obtained from the curable coating composition precursor and a cured composition obtained from curing the curable composition. The use of these 2k-compositions offers several advantages such as a longer shelf-life, the possibility to form a curable composition according to the user's needs, and a readily curable composition which itself offers further handling advantages for the user, in particular in the technical field of repairing defects on steel surfaces such as parts of car bodies in body shops.

The curable coating composition precursor according to the present invention may exhibit at least one or even a combination of desirable properties such as good handling properties, fast curing times, good mechanical strength of the cured composition and, in particular, excellent sandability in combination with providing protection against humidity. That is, the curable coating composition precursor may be stored for a period of time, handled by a worker in a car body shop, may be manually applied easily, may exhibit short curing times until being sandable, may be easily sandable to a favourable outer appearance, and my provide protection against weathering influences. At least one or even the combination of properties makes the curable coating composition precursor according to the present disclosure excellently suited for daily application in body shops concerned with the repair of steel surfaces such as car body parts.

Epoxy curing agents suitable for use in the present disclosure are compounds which are capable of cross-linking (curing) the epoxy resin. Suitable curing agents according to the present invention may be primary or secondary amines. The epoxy curing agent system present in part (A) comprises two epoxy curing agents, a first epoxy curing agent and a second epoxy curing agent which is distinct (i.e. chemically different) from the first epoxy curing agent. The first epoxy curing agent is the at least one diamine and the second epoxy curing agent is the amine epoxy curing agent based on a phenolic lipid.

Without wishing to be bound by theory, it is believed that the diamine (i.e. the first epoxy curing agent) provides fast curing properties to the curable adhesive due its inherent high reactivity, while further providing excellent chemical resistance after curing with the epoxy resin.

In particular aspect, the diamine for use herein may comprise the general structure: 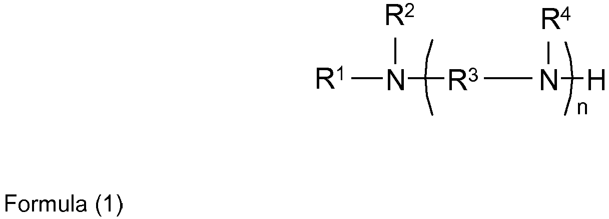 wherein
the residues R¹, R², and R⁴, independently from each other, may represent hydrogen or a hydrocarbon (such as an alkyl) or an alkoxy or a polyoxyalkyl residue containing about 1 to 15 carbon atoms;
R³ represents a polyether alkyl residue, preferably containing about 1 to 15 carbon atoms;
n represents any integer from 1 to 10.

The residues R¹, R², and R⁴ are chosen such that the amine contains two primary amine groups.

In a particular aspect, the diamine is a polyether amine having two primary amine moieties. The polyether amine may have from 1 to 12, or even from 1 to 6 catenary ether (oxygen) atoms.

In a preferred aspect, the first epoxy curing agent comprises at least one polyether amine derived from polypropylene oxide or polyethylene oxide. Exemplary polyether amines suitable for use herein are commercially available under the trade designation JEFFAMINE from Huntsman Chemicals, or TTD (4,7,10-trioxatridecane-1,13-diamine) commercially available, for example, from BASF, Ludwigshafen Germany.

Similarly, the diamine for use herein is a polymeric diamine such as an amidoamine or polyamidoamine. The polyamidoamine may be branched or unbranched aromatic or branched or unbranched aliphatic. Preferably, the polyamidoamine is an aliphatic polyamidoamine. Polyamidoamines which may be advantageously used in the context of the present disclosure are obtained as described in [0010] to [0029] of EP 249527 A1.

The at least one diamine may be at least one of the above-mentioned diamines or may also comprise a mixture of at least two of those diamines. Part (A) of the sandable coating composition as described herein comprises the at least one diamine in an amount of from 15 to 50 wt.-%, preferably from 20 to 45 wt.-%, more preferably from 25 to 40 wt.-%.

Part (A) of the curable coating composition precursor further comprises at least one amine epoxy curing agent based on an phenolic lipid in an amount of from 15 to 60 wt.-%, preferably from 20 to 45 wt.-%, more preferably from 25 to 40 wt.-%, based on the total weight of part (A) of the curable coating composition precursor. The use of the amine epoxy curing agent based on a phenolic lipid has the advantage of an improved resistance of the cured coating obtained from the curable coating composition towards weathering and water. In other words, the coating obtained from the compositions according to the present disclosure may exhibit good resistance to water and weathering. This has the advantage that the compositions as described herein offer a corrosion resistance when applied on metal surfaces such as steel surfaces which is the case in most vehicle body parts.

Generally, the term "phenolic lipids" is used for a class of natural products composed of long aliphatic chains and phenolic rings. As used herein, this term describes compounds of either natural or preferably synthetic origin composed of long aliphatic chains and phenolic rings. The presence of the at least one phenolic lipid in the curable casting resin and its precursor may have the effect of improved flexibility of the resin compositions even at low temperatures and increased hydrophobicity also of the cured resin obtained therefrom. Preferably, the at least one phenolic lipid is selected from alkylcatechols, alkylphenols, alkylresorcinols and anacardic acids. More preferably, the at least one phenolic lipid is an alkylphenol selected from propylphenol, butylphenol, amylphenol, octylphenol, nonylphenol, dodecylphenol and cardanol-based compounds. An amine epoxy curing agent as described herein may be obtained from the phenolic lipid by means of a Mannich reaction with aldehydes (such as formaldehyde) and polyamines with phenolic lipids which introduces aminoalkyl groups to the phenolic ring. Preferably, the amine epoxy curing agent based on a phenolic lipid is a phenalkamine. Phenalkamines useful for the compositions as described herein are commercially available from, for example, Huntsman Corp. under the trade designation Cardolite, such as Cardolite NX5607 and the like.

Part (A) and also part (B) of the curable coating composition precursor according to the present disclosure further comprise at least one inorganic filler material. Part (A) comprises the at least one inorganic filler material in an amount of from 10 to 60 wt.-%, preferably from 15 to 55 wt.-%, more preferably from 20 to 45 wt.-%, even more preferably from 25 to 40 wt.-%, based on the total weight of part (A) of the composition described herein. Similarly, part (B) comprises the at least one inorganic filler material in an amount of from 5 to 50 wt.-%, preferably from 10 to 45 wt.-%, more preferably from 15 to 40 wt.-%, based on the total weight of part (B) of the composition as described herein. The inorganic filler material may have at least one advantageous effect such as reduced density of the composition, improved sandability, improved flow and/or workability of the compositions. Inorganic filler materials are preferred over organic filler materials since they do not compromise the compressive strength of the compositions. In general, any inorganic filler material known in the art may be used, i.e. silica fillers, glass, ceramics and the like.

Preferably, the at least one filler material comprises at least one silica compound. Silica compounds may have the effect of giving rise to improved flow, improved workability and increased of the compositions as described herein, without sacrificing mechanical strength or resistance to water and the like of the cured coatings obtained therefrom. In this regard, it is preferred that the at least one silica compound is selected from fused silica, fumed silica, perlite, and any combinations and mixtures thereof. Silica compounds as described herein may preferably be employed in the form of silica particles. Preferably, the silica particles comprise fumed silica, preferably hydrophobically fumed silica, fused silica, amorphous silica particles, hollow silica particles, silica gels, calcium silicates, and any combinations thereof. Exemplary commercial fillers include SHIELDEX AC5 (a synthetic amorphous silica, calcium hydroxide mixture available from W.R. Grace in Columbia, MD, USA); CAB-O-SIL TS 720 (a hydrophobic fumed silica-treated with polydimethyl-siloxane-polymer available from Cabot GmbH in Hanau, Germany); AEROSIL VP-R-2935 (a hydrophobically fumed silica available from Degussa in Düsseldorf, Germany); AEROSIL R-202 (a hydrophobically fumed silica available from Evonik Industries, Germany); glass-beads class IV (250-300 microns): amorphous silica (available from 3M Deutschland GmbH in Neuss, Germany); MINSIL SF 20 (available from Minco Inc., 510 Midway, Tennessee, USA); amorphous, fused silica; and APYRAL 24 ESF (epoxysilane-functionalized (2 wt.-%) aluminium trihydrate available from Nabaltec GmbH in Schwandorf, Germany). Fused silica is available, for example, under the trade designation MINSIL from Minco Inc., Midway, USA.

It is further preferred that the at least one inorganic filler material in part (B), preferably also part (B), comprises inorganic microspheres. Inorganic microspheres have the effect of yielding improved sandability and, in particular, a reduced density of the compositions. Microspheres have the capability of reducing the density of a composition, i.e. the density of a composition as described including the microspheres is lower than the density of a composition without the microspheres. Preferably, the inorganic microspheres are hollow inorganic microspheres due to an even further reduced density of the resulting compositions. The microspheres are preferably selected glass bubbles or ceramic bubbles. By way of example, microspheres may be selected from a variety of materials including glass, silica, ceramic (including sol-gel derived) or zirconia. The inorganic filler materials may have an average particle size typically of less than 500 µm, or between 10 and 100 µm. Preferred hollow inorganic microspheres include glass microspheres which are commercially available, for example, from 3M Company under the trade designation Glass bubbles D32, MICROBUBBLES or Scotchlite D32/4500.

Preferably, part (B) of the curable coating composition precursors as described herein comprises the inorganic microspheres in an amount of from 0.5 to 15 wt.-%, preferably from 1 to 10 wt.-%, more preferably from 1.5 to 7.5 wt.-%, based on the total weight of part (B). Similarly, it is also preferred that part (A) comprises the inorganic microspheres, preferably microspheres in an amount of from 0.5 to 15 wt.-%, preferably from 1 to 10 wt.-%, more preferably from 1.5 to 7.5 wt.-%, based on the total weight of part (A).

The first part (A) of the curable coating composition precursor according to the present disclosure may further comprise a metal salt catalyst. This may have the effect of an increased curing speed, which is very advantageous in many applications, in particular where it is desirable to obtain a sandable coating within a short period of time. This is often the case when damaged parts of car bodies are to be repaired, typically in body shops. Without wishing to be bound by theory, it is believed that the metal nitrate catalyst provides further acceleration effect to the curing reaction and forms a reactive complex with the second epoxy curing agent beneficially impacting the thixotropic properties of the curable adhesive composition. Accordingly, curing at ambient temperature, together with good mechanical strength of the bond obtained may be achieved.

Preferably, the metal in the metal salt catalyst is selected from the group consisting of alkali, earth alkali, rare earth metals, aluminium, preferably from alkali and earth alkali, more preferably from earth alkali, even more preferably from calcium, caesium, strontium, and magnesium. The anion is preferably selected from nitrate, nitrite and organic acid anion, preferably sulfates and triflates, more preferably triflates, of which nitrates and triflates are particularly preferred. Nitrates are strongly preferred. It was found that the combination of the secondary curative and the metal salt catalyst gives rise to an increase in curing speed. In this regard, metal salt catalyst selected from the group consisting of calcium nitrate, calcium triflate, aluminium nitrate, magnesium nitrate, lithium nitrate, lanthanum nitrate, and any combinations thereof is preferred. The use of calcium nitrate, magnesium nitrate, calcium triflate, and any combinations thereof is particularly preferred. Without wanting to being bound to theory, it is believed that the metal salt catalyst thickens the material and therefore influences the viscosity of the part (A) of said curable coating composition precursor in a positive way.

When present, the at least one metal salt catalyst is contained in part (A) of the compositions as described herein in an amount of from 0.1 to 15 wt.-%, preferably from 1 to 12 wt.-%, more preferably from 1.5 to 10 wt.-%, based on the total weight of part (A) of the curable coating composition precursor.

It is further preferred that part (A) and/or part (B), preferably part (B), of the compositions as described herein comprise at least one impact modifier. This may have the effect of improving the mechanical behaviour of the cured material at low temperatures. In particular, a certain brittleness of the cured material at low temperatures may be avoided. Preferably, the at least one impact modifier is selected from the list of butadiene rubbers, nitrile rubbers, and core-shell rubbers, more preferably from the list of core-shell rubbers.

Exemplary compounds which may be advantageously used as butadiene rubbers or nitrile rubbers are carboxyl-, amine-, epoxy-, hydroxyl- or methacrylate-terminated butadiene, butadiene styrene or butadiene acrylonitrile copolymers, preferably amine terminated butadiene styrene or butadiene acrylonitrile copolymers. Such impact modifiers are commercially available, for example, under the trade designations Hypro CTBN, ATBN, ETBN, HTB or VTBNX from CVC Thermoset Specialities and Hycar ATBN from Amerald Materials.

With regard to the core-shell rubber as impact modifier, any core-shell rubber impact modifier commonly known in the art may be used in the context of the present disclosure. In a typical embodiment, the core-shell rubber impact modifier is a composite material configured by materials where the core portion on the inside and the shell portion on the outside are mutually different. Herein, the term "different materials" refers to materials where the composition and/or properties are mutually different, and therefore includes materials where the same type of resins are used but the molecular weights are mutually different, and the like.

From the perspective of favorably achieving a toughening effect on the compositions as described herein, the Tg of the shell portion is preferably higher than the Tg of the core portion. In this case, while flexibility is provided to the cured epoxy adhesive because the core portion which has a relatively low Tg functions as a centralized point of stress, the shell portion suppresses unwanted agglomeration of the core-shell rubber, and thus the core-shell impact modifier can be uniformly dispersed in the compositions as described herein.

In an exemplary embodiment, the materials of the core portion and the shell portion can be selected such that the Tg of the core portion is approximately -110°C or higher to approximately -30°C or lower, and the Tg of the shell portion is approximately 0°C or higher to approximately 200°C or lower. In the present disclosure, the Tg of the core portion material and shell portion material is defined as the peak temperature of tanδ during dynamic viscoelasticity measurements.

The core-shell toughening agent can be a conjugate diene such as butadiene, isoprene, 1,3-pentadiene, cyclopentadiene, dicyclopentadiene, or the like, or a nonconjugate diene polymer such as 1,4-hexadiene, ethylidene norbornene, or the like; copolymers of these conjugate or nonconjugate dienes with an aromatic vinyl compound such as styrene, vinyl toluene, α-methyl styrene, and the like, or with an unsaturated nitrile compound such as acrylonitrile, methacrylonitrile, or the like, or with a (meth)acrylate such as 2-hydroxyethyl acrylate, 2-hydroxyethyl methacrylate, 3-hydroxybutyl acrylate, glycidyl methacrylate, butoxyethyl methacrylate, and the like; acrylic rubber such as polybutyl acrylate and the like; silicone rubber; or a core-shell graft copolymer having a core part that includes a rubber component such as an IPN composite rubber containing silicone and a polyalkyl acrylate, and a shell component formed by copolymerizing a (meth)acrylate ester around the core part. Polybutadiene, a butadiene - styrene copolymer, or an acrylic butadiene rubber - styrene copolymer can be advantageously used as the core portion, and a material formed by graft-copolymerizing methyl (meth)acrylate can be advantageously used as the shell portion. The shell portion can be laminar, or the shell portion can be configured from one layer or a plurality of layers.

Examples of the core-shell rubber impact modifier include methyl methacrylate - butadiene copolymer, methyl methacrylate - butadiene - styrene copolymer, methyl methacrylate - acrylonitrile - butadiene - styrene copolymer, methyl methacrylate - acrylic rubber copolymer, methyl methacrylate - acrylic rubber - styrene copolymer, methyl methacrylate - acrylic butadiene rubber copolymer, methyl methacrylate - acrylic butadiene rubber - styrene copolymer, methyl methacrylate - (acrylic silicone IPN rubber) copolymer, and the like, but are not restricted thereto. Methyl methacrylate - butadiene copolymer, methyl methacrylate - butadiene - styrene copolymer, and methyl methacrylate - acrylic butadiene rubber - styrene copolymer can be advantageously used as the core-shell toughening agent.

The core-shell impact modifier is normally in the form of fine particles, and the average value (weight average particle diameter) of the primary particle diameter thereof is generally approximately 0.05 µm or higher or approximately 0.1 µm or higher to approximately 5 µm or lower or approximately 1 µm or lower.

Preferably, the core-shell rubber can be used in a state dispersed in a matrix. It is preferred that the matrix is an epoxy resin. A matrix with favorable affinity to either first or second epoxy resin as described herein is particularly preferable from the perspective of favorable dispersion of the core-shell rubber in the composition as described herein. Examples of the matrix can include epoxy resins (such as bisphenol A and the like).

The core-shell impact modifier can be a commercial product that is provided as a resin modifying agent or the like, and examples include BTA 751 (commercially available from Dow Chemical) as a methyl methacrylate-butadiene-styrene (MBS) type core-shell resin, MX-153 (commercially available from Kaneka) as a resin where methyl methacrylate-butadiene-styrene (MBS) dispersed in bisphenol A diglycidyl ether), and MC-257 (commercially available from Kaneka) as a butadiene core-shell resin,dispersed in epoxy, and F351 (commercially available from Aika Industries) as the acrylic core-shell resin, Paraloid 2650A (butadiene rubber), Hycar ATBN (CVC Chemicals, liquid butadiene rubber), and the like. Without wishing to be bound by theory, it is believed that the core-shell polymer rubber beneficially impacts, in particular, the low temperature adhesion properties and impact resistance of the compositions described herein.

With regard to the effects brought about the presence of the at least one impact modifier in the compositions as described herein, it is preferred that part (B) comprises the at least one impact modifier in an amount of from 0.5 to 10 wt.-%, preferably from 1 to 8 wt.-%, more preferably from 1.5 to 5 wt.-%, based on the total weight of part (B).

The second part (B) of the curable coating composition precursor according to the present disclosure comprises at least one first epoxy resin and at least one second epoxy resin. Suitable epoxy resins for use herein will be easily identified by those skilled in the art, in the light of the present description.

The epoxy resin for use herein is not particularly limited. Epoxy resins are polymers having one or more epoxy-functionality. Typically but not exclusively, the polymers contain repeating units derived from monomers having an epoxy-functionality but epoxy resins can also include, for example, silicone-based polymers that contain epoxy groups or organic polymer particles coated with or modified with epoxy groups or particles coated with, dispersed in, or modified with epoxy-groups-containing polymers. The epoxy-functionalities allow the resin to undertake cross-linking reactions. The epoxy resins may have an average epoxy-functionality of at least 1, greater than one, or of at least 2.

Any epoxy resins well known to those skilled in the art may be used in the context of the present disclosure. Epoxy resins may be aromatic, aliphatic, cycloaliphatic or mixtures thereof. In a typical aspect, the epoxy resins for use herein are aromatic. Preferably, the epoxy resins contain moieties of the glycidyl or polyglycidyl ether type. Such moieties may be obtained, for example, by the reaction of a hydroxyl functionality (for example but not limited to dihydric or polyhydric phenols or aliphatic alcohols including polyols) with an epichlorohydrin-functionality. As referred to herein, dihydric phenols are phenols containing at least two hydroxy groups bonded to the aromatic ring (also referred to as "aromatic" hydroxy groups) of a phenol -or in case of polyphenols at least two hydroxy groups are bonded to an aromatic ring. This means the hydroxyl groups can be bonded to the same ring of the polyphenol or to different rings each of the polyphenol. Therefore, the term "dihydric phenols" is not limited to phenols or polyphenols containing two "aromatic" hydroxy groups but also encompasses polyhydric phenols, i.e. compounds having more than two "aromatic" hydroxy groups.

Examples of useful dihydric phenols include resorcinol, catechol, hydroquinone, and polyphenols including p,p'-dihydroxydibenzyl, p,p'-dihydroxyphenylsulfone, p,p'-dihydroxybenzophenone, 2,2'-dihydroxyphenyl sulfone, p,p'-dihydroxybenzophenone, 2,2-dihydroxy-1,1-dinaphthylmethane, and the 2,2', 2,3', 2,4', 3,3', 3,4', and 4,4' isomers of dihydroxydiphenylmethane,dihydroxydiphenyldimethylmethane, dihydroxydiphenylethylme thylmethane, dihydroxydiphenylmethylpropylmethane, dihydroxydiphenylethylphenyl-methane,dihydroxydiphenylpropylenphenylmethane, dihydroxydiphenylbutylphenylmethane, dihydroxydiphenyltolylethane, dihydroxydiphenyltolylmethylmethane, dihydroxydiphenyldicyclohexylmethane, and dihydroxydiphenylcyclohexane.

Preferred epoxy resins include epoxy resins containing or consisting of glycidyl ethers or polyglycidyl ethers of dihydric or polyhydric phenols, such as for example, but not limited to bisphenol A, bisphenol F and combinations thereof. They contain one or more repeating units derived from bisphenol A and/or F. Such ethers, or such repeating units are obtainable, for example, by a polymerization of glycidyl ethers of bisphenol A and/or F with epichlorohydrin. Epoxy resins of the type of diglycidyl ether of bisphenol A can be represented by the formula wherein n denotes the repeating unit (in case of n= 0 the formula below represents the diglycidyl ether of bisphenol A):

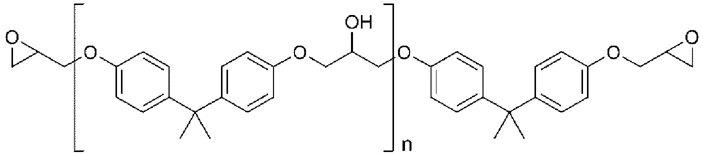

Typically, the epoxy resins are blends of several resins. Accordingly, n in the formula above may represent an average value of the blend, and may not be an integer but may include values like, for example and not limited thereto, 0.1 to 2.5.

Instead of, or in addition to, using the aromatic epoxy resins described above also their fully or partially hydrogenated derivatives (i.e. the corresponding cycloaliphatic compounds) may be used. Instead of, or in addition to using aromatic epoxy resins also aliphatic, for example acyclic, linear or branched, epoxy resins may be used.

Typically, the epoxy resin is liquid. The epoxy resins may include solid epoxy resins, used in dissolved form, or dispersed, for example in another liquid resin. Preferably, the epoxy resin is liquid at ambient conditions (23 °C, 1 bar). The epoxy resins may contain halogens, preferably bromine atoms to make them less flammable.

Examples of suitable and commercially available epoxy resins include diglycidylether of bisphenol A (available under the trade designation EPON 828, EPON 830, EPON 1001 or EPIKOTE 828 from Hexion Speciality Chemicals GmbH, Rosbach, Germany, or under the trade designation D.E.R-331 or D.E.R-332 from Dow Chemical Co,); diglycidyl ether of bisphenol F (e.g. EPICLON 830 available from Dainippon Ink and Chemicals, Inc. or D.E.R.-354 from Dow Chemical Co, Schwalbach/Ts., Germany); diglycidyl ethers of a blend of bisphenol A and bisphenol F (e.g. EPIKOTE 232 available from Momentive Speciality Chemicals, Columbus, USA). Other epoxy resins based on bisphenols are commercially available under the trade designations EPILOX (Leuna Epilox GmbH, Leuna, Germany); flame retardant epoxy resins are available under the trade designation D.E.R 580 (a brominated bisphenol type epoxy resin available from Dow Chemical Co.). Cycloaliphatic epoxy resins are commercially available under the trade designation EPINOX (Hexion Specialty Chemicals GmbH).

Preferably, part (B) of the compositions as described herein comprise the at least one first epoxy resin in an amount in the range of from 15 to 60 wt.-%, preferably from 20 to 55 wt.-%, more preferably from 25 to 50 wt.-%, based on the total weight of part (B).

The second epoxy resin is distinct from the first epoxy resin, i.e. chemically different. The chemical difference to the first epoxy resins may give rise to further differences to the first epoxy resins.

For example, the at least one second epoxy resin may be a multifunctional epoxy resin such as a trifunctional epoxy resin. This may be a single epoxy resin or may also be a combination of two or more epoxy resins. In a preferred embodiment, the equivalent weight of the trifunctional or higher epoxy is approximately 60 or higher, or approximately 70 or higher, or approximately 80 or higher from the perspective of ease of procurement and reaction properties, and is approximately 1000 or lower, or approximately 500 or lower, or approximately 300 or lower from the perspective of the heat resistance of the cured epoxy adhesive.

Preferred examples of trifunctional epoxy resins used herein include glycidyl amine type epoxy resins, glycidyl phenol type epoxy resins, and the like. Examples of glycidyl amine type epoxy resins include triglycidyl aminophenol epoxy compounds, triglycidyl aminocresol epoxy compounds. Examples of glycidyl phenol type epoxy resins include phenol novolac epoxy compounds, triphenyl methane triglycidyl ether compounds, and the like. Epoxy resins which may be employed as trifunctional (or higher) second epoxy resins as described herein are commercially available under the trade designations TACTIX and ARALDITE from Huntsman. It is also preferred that at least one of the at least one second epoxy resin is selected from the group commonly known to the skilled person as novolac epoxy resins. For example, well-known Novolac compounds are ortho-ortho, ortho-para and para-para methylene bridged phenolic compounds. Examples are the reaction products of phenol and formaldehyde. Novolac epoxy resins may be obtained, e.g. from the reaction of epichlorhydrin and said phenol-formaldehyde novolac compounds. Novolac epoxy compounds generally have multi-epoxy functionalities of greater than 1, greater than 2, or even greater than 3 as defined above. Epoxy novolac resins as described herein may be liquid or semi-solid. Examples of suitable and commercially available novolac epoxy resins are the novolac epoxy resins available from Dow Chemicals, e.g. under the trade designation D.E.N.

It is also preferred that the at least one second epoxy resin is an epoxy resin comprising additional functional moieties. Functional moieties are moieties which may react with other functional moieties such as epoxy moieties. The presence of additional functional moieties in the at least one second epoxy resin may therefore enhance the reactivity and/or the ability to crosslink with other epoxy resins such as the at least one first epoxy resin. This may be enhance the hardness, resistance to water and/or organic solvents, resistance to corrosion, resistance to mechanical influences and the like of the coatings obtained from the compositions as described herein. Reactive moieties as described herein may be moieties selected from alcohol, amines (in particular secondary amines), thiols, sulphides, and the like. Exemplary and preferred epoxy resins modified with reactive moieties are commercially available under the trade designation Epalloy (such as Epalloy 7200) from CVC Chemicals.

Using the combination of first and second epoxy resins as described herein may give rise to particularly desirable combination of properties of the cured composition such as high mechanical strengths and favourable properties such as high overlap shear strength and high peel strength, even at elevated temperatures. In addition, the combination of said first and second epoxy resins as described herein may also accelerate the cure rate without sacrificing mechanical strengths of the obtained coatings.

With regard to the respective amounts, it is preferred that the at least one second epoxy resin as described herein is comprised in part (B) in an amount of from 15 to 60 wt.-%, preferably from 20 to 55 wt.-%, more preferably from 25 to 50 wt.-%, based on the total weight of part (B).

It is further preferred that part (B) of the curable adhesive precursor according to the present disclosure comprises an epoxy-based reactive diluent. Reactive diluents are epoxy-containing molecules. The epoxy-based reactive diluent for use herein is not particularly limited. Any epoxy-based reactive diluent commonly known in the art may be used in the context of the present disclosure.

Without wishing to be bound by theory, it is believed that the epoxy-based reactive diluent beneficially impacts, in particular, the flow characteristics of the curable compositions as described herein.

In a particular aspect of the present disclosure, wherein the epoxy-based reactive diluent for use herein has a saturated or unsaturated cyclic backbone, and preferably comprises glycidyl ether as reactive terminal end portions.

According to a preferred aspect, the epoxy-based reactive diluent for use herein is selected from the group consisting of diglycidyl ether of resorcinol, diglycidyl ether of cyclohexane dimethanol, diglycidyl ether of neopentyl glycol, triglycidyl ether of trimethylolpropane, and any mixtures thereof.

Commercially available reactive diluents for use herein include for example "Reactive Diluent 107" (available from Hexion) and the "Epodil" series (available from Air Products and Chemical Inc, Allentown, PA, USA) including in particular EPODIL 746, EPODIL 747, EPODIL 748 and EPODIL 757.

Part (B) of the compositions according to the present disclosure preferably further comprises at least one epoxy reactive flexibilizer. An epoxy reactive flexibilizer is a compound having at least one epoxy moiety and also at least one long alkyl or alkenyl component. The presence of the at least one epoxy reactive flexibilizer has the effect of improved flexibility of the curable composition and the cured coatings obtained therefrom even at low temperatures and an increased hydrophobicity of the cured coating. While the first property may be desirable from a handling point of view, both properties are advantageous with regard to corrosion protection of a substrate surface onto which the compositions as described herein are coated. This is in particular advantageous when the compositions according to the present disclosure are applied onto a steel surface. In this case, an improved corrosion protection may be expected.

The epoxy reactive flexibilizer is preferably a component comprising an aromatic core such as phenyl having at least one long aliphatic side chain and at least one side chain comprising at least one epoxy moiety. Such compounds are obtainable from epoxidizing phenolic lipids. Generally, the term "phenolic lipids" is used for a class of natural products composed of long aliphatic chains and phenolic rings. As used herein, this term describes compounds of either natural or preferably synthetic origin composed of long aliphatic chains and phenolic rings. Preferably, the at least one phenolic lipid is selected from alkylcatechols, alkylphenols, alkylresorcinols and anacardic acids. More preferably, the at least one phenolic lipid is an alkylphenol selected from propylphenol, butylphenol, amylphenol, octylphenol, nonylphenol, dodecylphenol and cardanol-based compounds. Epoxy-reactive Cardanol-based compounds are commercially available, e.g. under the trade designation NX-2026 or Ultra Lite 2023 from Cardolite Corporation.

It is preferred that part (B) of the compositions as described herein comprise the at least one epoxy-reactive flexibilizer in an amount of from 0.1 to 10 wt.-%, preferably from 0.5 to 8 wt.-%, more preferably from 1 to 5 wt.-%, based on the total amount of part (B).

Preferably, the curable coating composition precursor according to the present disclosure comprises
(a) a first part (A) comprising:
   (i) at least one diamine in an amount of from 15 to 50 wt.-%, preferably from 20 to 45 wt.-%, more preferably from 25 to 40 wt.-% based on the total weight of part (A);
   (ii) at least one amine epoxy hardener based on an phenolic lipid in an amount of from 15 to 50 wt.-%, preferably from 20 to 45 wt.-%, more preferably from 25 to 40 wt.-% based on the total weight of part (A);
   (iii) at least one filler material in an amount of from 15 to 55 wt.-%, preferably from 20 to 50 wt.-%, more preferably from 25 to 45 wt.-% based on the total amount of part (A);
   (iv) optionally, at least one metal salt catalyst in an amount of from 0.1 to 15 wt.-%, preferably from 1 to 12 wt.-%, more preferably from 1.5 to 10 wt.-% based on the total amount of part (A);
(b) a second part (B) comprising:
   (i) at least one first epoxy resin in an amount of from 15 to 60 wt.-%, preferably from 20 to 55 wt.-%, more preferably from 25 to 50 wt.-% based on the total amount of part (B);
   (ii) at least one second epoxy-based resin distinct from the first epoxy resin in an amount of from 15 to 60 wt.-%, preferably from 20 to 55 wt.-%, more preferably from 25 to 50 wt.-% based on the total amount of part (B);
   (iii) at least one epoxy-reactive flexibilizer in an amount of from 0.1 to 10 wt.-%, preferably from 0.5 to 8 wt.-%, more preferably from 1 to 5 wt.-% based on the total amount of part (B);
   (iv) optionally, inorganic microspheres in an amount of from 0.5 to 10 wt.-%, preferably from 1 to 8 wt.-%, more preferably from 1.5 to 5 wt.-% based on the total amount of part (B);
   (v) optionally, at least one inorganic filler material in an amount of from 5 to 50 wt.-%, preferably from 10 to 45 wt.-%, more preferably from 15 to 40 wt.-% based on the total amount of part (B);
   (v) optionally, at least one impact modifier in an amount of from 0.5 to 10 wt.-%, preferably from 1 to 8 wt.-%, more preferably from 1.5 to 5 wt.-% based on the total amount of part (B).

It is preferred that part (A) and part (B) are present in the compositions as described herein, in particular in the curable coating composition precursor, in a ratio of 10:1 to 1:5 (part (A):part (B)), preferably from 5:1 to 1:2, more preferably from 3:1 to 1:1. For example, the ratio of part (A) to part (B) may be about 2:1 by volume. This may be achieved by containing part (A) and part (B) in an applicator well-known in the art comprising two separate cartouches (i.e. part (A) in one cartouche and part (B) in the other cartouche) and a mixing nozzle. It is also understood that the advantageous effects of the compositions according to the present disclosure are only achieved within these mixing ratios. For example, using a lower amount of part (A) may compromise both curing speed of the curable coating composition as well as the resistance of the coating obtained therefrom.

The present disclosure further provides a curable coating composition, obtained from combining parts (A) and (B) of the curable coating composition precursor as described herein. Combining as used herein has the meaning commonly used in the art for two-component compositions, i.e. combining both parts and mixing afterwards or mixing and combining in one step. This is often the case in mixing nozzles well-known in the art and commercially used and available for this purpose. The curable coating composition is preferably prepared directly before its intended use, i.e. the application onto a surface of a substrate. Due to the properties of the compositions as described herein, the surface is preferably a metal surface such as a steel sheet or a steel part of a body of a vehicle such as a car. After application and subsequent curing of the coating composition according to the present disclosure, a sandable coating is obtained, which further protects the surface against influences such as water which would otherwise have a negative impact to the surface, e.g. the triggering of corrosion.

Accordingly, the present disclosure further provides a method of providing a coated surface, the method comprising the following steps:
(a) Providing a curable coating composition precursor as described herein,
(b) Combining parts (A) and (B) of the curable coating composition precursor so as to form a curable coating composition;
(c) Applying the curable coating composition to at least part of the surface of at least one substrate;
(d) Allowing the curable coating composition to cure, thereby obtaining a sandable surface.

As described above, parts (A) and (B) are combined so as to form a curable coating composition, preferably by means of a mixing nozzle from which the curable coating composition is directly applied onto at least part of the surface of at least one substrate. Application of the curable coating composition may be carried out by means commonly known and used in the art, e.g. direct manual application from the mixing nozzle (and optional further manual spreading by a spatula and the like), application via coating knife or doctor blade, etc. Coating onto the substrate as described herein comprises coating onto a substrate until a desired thickness, but also comprises filling up cracks, holes and other kind of damages in the surface of the substrate. Accordingly, a more or less even surface coating may be obtained. This is particular useful when repairing damaged metal parts (such as steel parts) of body parts of vehicles such as cars.

Next, in step (d), the curable coating composition is allowed to cure. That is, the curable coating composition is preferably allowed to cure at ambient temperatures, without the need of externally heating the coating up, such as putting the coated substrate into a hot air oven. The ability to cure at ambient temperatures without the need of extra heating is a particular advantage of the coating compositions as described herein, in particular in conjunction with manually repairing or restoring surfaces of car bodies in respective body shops. That is, it is possible to repair or restore surfaces of a car without needing to remove the damaged body part from the car itself. This represents a further advantage of the coating compositions as described herein.

Preferably, step (d) is carried out until curing of the coating composition in less than 5 h, less than 3.5 h, preferably in less than 3 h, more preferably in less than 2.5 h. Such short curing times, in particular in combination with allowing the coating composition to cure at ambient temperatures without the need of additional heating equipment, is a particular advantage of the coating compositions according to the present disclosure. This is due to shortened repair times in car body shops, i.e. a short time from application of the coating composition to being able to sand and finish the repaired or restored surface is very much desirable in car body shops (and in repair shops in general). After allowing the curable coating composition to cure, a sandable surface is obtained. This surface may be then manually or automatically sanded and/or polished so as to obtain a sanded surface which then may be further treated, e.g. by painting.

Preferably, the at least one substrate as described herein is selected from polymer materials, composite materials, wood and any combinations thereof, preferably metal and composite materials. Generally, these materials may be coated with the compositions according to the present disclosure. With respect to the advantageous properties of the coating compositions, metal (in particular steel) and composite materials are preferred, since the coating obtained from the coating compositions offer a good sandability after a short period of time as well as a good corrosion protection. This is generally desirable with car bodies. Furthermore, it is preferred that the surface of the substrate comprises defects such as cracks and/or gaps, which are filled and/or covered by the compositions according to the present disclosure. The substrate is preferably a part of a body of a vehicle, preferably a car, truck or train, more preferably a car. In this regard, it is further preferred that the method is a method for repairing steel surfaces, preferably car bodies.

Accordingly, the present disclosure further provides a use of the coating compositions as described herein for repairing defects in vehicle bodies, preferably car bodies.

### Examples

The present disclosure is further described without however wanting to limit the disclosure thereto. The following examples are provided to illustrate certain embodiments but are not meant to be limited in any way. Prior to that some test methods used to characterize materials and their properties will be described. All parts and percentages are by weight unless otherwise indicated.

### EXAMPLES

### Materials used:

| **Raw Material name** | **Description** | **Supplier** |
|---|---|---|
| Cardolite NX5607 | Phenalkamine | Cardolite cooperation |
| TTD-Epoxy adduct | Trioxa decane amine adducted with Epon 828 | BASF |
| Polymeric diamine | Amidoamine | 3M |
| Calcium nitrate hydrates | Ca-(NO3)2^{∗}4H2O | |
| Glass bubbles | Glass bubbles S32LD | 3M |
| Eurocell 140 | Volcanic rock | Stauss Perlite GmbH |
| Minsil SF 20 | Fused Silica | 3M |
| Aerosil R202 | Fumed Silica | Degussa |
| Carbon Black | Carbon | Columbian chemicals Company |
| Epon 828 | DGEBA Epoxy resin | Hexion |
| Epalloy 7200 | Modified epoxy resin | CVC Chemicals |
| Paraloid 2650J | Core shell rubber | Dow |
| Epodil 757 | Epoxy reactive diluent | Air products |
| Cardolite Ultra Lite 513 | Epoxy reactive flexiblizer | Cardolite |
| Eponex 1510 | hydrogenated epoxy resin | Hexion |

### Test Methods

### 1. Salt spray test

Corrosion resistance of the compositions was determined in a salt spray test according to DIN 50021. Steel type DX54 Z100 was sanded manually by using 3M sanding papers P80 and P150 consequently. Surfaces areas of 100 X 200mm were prepared. The different compositions were extruded directly from the 200 ml cartridge through a mixing nozzle and applied on surface. The mixed material was uniformly spread with a spatula to get a thickness of about 0.8 mm and allowed to cure at room temperature for 7 d. The obtained samples were then kept in a salt spray chamber (aqueous NaCI-solution) under the following parameters: pH 6.5 to 7.2; concentration of NaCI-solution 50 ± 5 g/l, temperature within the chamber 35 °C ± 2 °C, excess pressure at misting nozzle 0.7 to 1.4 bar; condensed volume of sprayed solution caught with a funnel having a diameter of 100 mm in a calibrated measuring cyclinder: 1 to 2 ml per hour. After 4 weeks the samples were removed from the chamber. By visual inspection it was determined whether the coating had delaminated from the steel or if a formation of rust was visible.

### 2. Humidity test

The resistance towards humidity was determined according to DIN 50017. Sample preparation was carried out as described above for the salt spray test. The samples were then installed into a condense water constant climate chamber installed and kept at a temperature of 40 °C and humidity of 100 %. After 2 weeks the samples were removed from the chamber and visually inspected with regard to delamination of the coating from the steel and formation of rust.

### 3. Cure speed

After extrusion of the compositions onto the substrate as described below, the cure rate of each composition was checked in certain time intervals in order to determine the time to sandability as follows. Sandability was checked by trying to sand to the coating with sandpaper. When the sander dust was dry and the sanded surface was smooth, then the coating was determined "sandable". One hour after application of the coating sandability was first checked, then every 30 min. In the first hour after application, the coating was just visually checked without sanding it.

### Preparation of part (A) and part (B)

The ingredients as set forth in tables 1 and 2 were used to prepare part (A) and part (B) according to the procedures set forth below.

**Table 1: Composition of part (A)**

| **Raw Materials Part A** | **Ex. 1** | **Comp. Ex. 1** |
|---|---|---|
| Cardolite NX5607 | 35.5 | 0 |
| TTD-Epoxy adduct | 0 | 35.5 |
| | 0 | 0 |
| | 0 | 0 |
| Polymeric diamine | 35.5 | 35.5 |
| Ca-(NO3)2 | 6 | 6 |
| S32LD | 3.6 | 3.6 |
| Eurocell 140 | 2.5 | 2.5 |
| Minsil SF 20 | 12 | 12 |
| Aerosil R202 | 4.8 | 4.8 |
| C-Black | 0.1 | 0.1 |

**Table 2: Composition of part (B)**

| **Raw Material Part B** | **wt.-%** |
|---|---|
| Epon 828 | 30.7 |
| Paraloid 2650J | 2.7 |
| Epalloy 7200 | 33.3 |
| Epodil 757 | 2.2 |
| Cardolite NC 513 ultra-light | 3.3 |
| Eponex 1510 | 5.6 |
| Glass bubbles S32LD | 3.3 |
| Eurocell A 140 | 3.3 |
| Minsil SF20 | 11.1 |
| Aerosil R202 | 4.4 |

### Part B:

In 150 ml Speed mixer cup the epoxy resin Epon 828 and Paraloid 2650J (Core shell rubber) were weighed and mixed for 1 min at 3500 rpm. The mixture was then placed in air-driven Oven at 100 °C for about 60 min and then again mixed for 1 min to ensure complete dispersion of the core shell particles in the epoxy resin. In next step Epalloy 7200, Epodil 757, Eponex 1510 and Cardolite NC 513 ultra-light were added to the above mixer and mixed for 1 min. After that Minsil SF 20, Eurocell 140, Aerosil R202 were added and mixed until homogeneous mixture was obtained. Then glass bubbles were added and mixed for further 1 min. The complete mixture was degassed under mixing in thinky speed mixer. The degassed part B was then filled into one side of a 200 ml dual pack cartridge having a mix ratio of 2 to 1 by volume. That is, the mixing ration part (B):part (A) was 2:1 by volume.

### Part A:

In 150 ml Speed mixer cup the the calcium nitrates were dissolved in the amine. This was achieved by mixing them together and heat the mixture to about 60 °C in oven. Following that the fillers were (Eurocell, Minsil, Aerosil, Glass bubbles & Carbon black) added stepwise until a homogeneous mixture was obtained. The complete mixture was then degassed under mixing and filled in the smaller compartment of the 200 ml Cartridge.

### Evaluation:

Steel type DX54 Z100 was sanded manually by using 3M sanding papers P80 and P150 consequently. Surfaces areas of 100 X 200mm were prepared. The different compositions were extruded directly from the 200 ml cartridge through a mixing nozzle and applied on surface. The mixed material was uniformly spread with a spatula to get a thickness of about 0.8 mm and allowed to cure at room temperature, then again sanded to get smooth surface. In certain time interval the cure rate of each composition was checked in order to determine time to sandability. The fully cured products was then subjected humidity tests as well as to the salt spray test.

The results are summarized in table 3. As comparative example 2, a commercially available product was used (Henkel Teroson 5010 TR).

**Table 3: Test result summary**

| | Ex. 1 | Comp. Ex. 1 | Comp. Ex. 2 |
|---|---|---|---|
| Time to sanding at RT (Cure Speed) | 1.5 - 2 h | 1.5 - 2 h | 6 h |
| Resistant to humidity | Pass | Fail (Delamination) | Pass |
| Salt Spray test (Corrosion) | Pass | Fail | Pass |
| Visual appearance | Smooth surface | Pin holes | Smooth surface |

## Claims

1. A curable coating composition precursor, comprising
(a) a first part (A) comprising:
(i) at least one diamine in an amount of from 10 to 50 wt.-% based on the total weight of part (A) ;
(ii) at least one amine epoxy hardener based on an phenolic lipid in an amount of from 10 to 50 wt.-% based on the total weight of part (A);
(iii) at least one inorganic filler material in an amount of from 10 to 60 wt.-% based on the total amount of part (A);
(b)a second part (B) comprising:
(i) at least one first epoxy resin in an amount of from 15 to 60 wt.-% based on the total amount of part (B);
(ii) at least one second epoxy-based resin distinct from the first epoxy resin in an amount of from 15 to 60 wt.-% based on the total amount of part (B);
(iii) at least one epoxy-reactive flexibilizer in an amount of from 0.1 to 10 wt.-% based on the total amount of part (B);
(iv) at least one inorganic filler material 5 to 50 wt.-%, preferably from 10 to 45 wt.-%, more preferably from 15 to 40 wt.-% b based on the total amount of part (B).

2. The curable coating composition precursor according to claim 1, wherein the at least one diamine comprises at least one polymeric diamine.

3. The curable coating composition precursor according to claim 1 or claim 2, wherein the inorganic filler material comprises at least one silica compound, preferably selected from fused silica, fumed silica, perlite, and any combinations and mixtures thereof.

4. The curable coating composition precursor according to any one of the preceding claims, wherein the at least one inorganic filler material in part (B) comprises inorganic microspheres.

5. The curable coating composition precursor according to any one of the preceding claims, wherein phenolic lipid of the at least one amine epoxy curing agent based on a phenolic lipid is selected from alkylcatechols, alkylphenols, alkylresorcinols and anacardic acids.

6. The curable coating composition precursor according to any one of the preceding claims, wherein the phenolic lipid of the at least one amine epoxy curing agent based on a phenolic lipid is an alkylphenol selected from propylphenol, butylphenol, amylphenol, octylphenol, nonylphenol, dodecylphenol and cardanol-based compounds.

7. The curable coating composition precursor according to any one of the preceding claims, wherein the at least one amine epoxy curing agent based on a phenolic lipid is a phenalkamine.

8. The curable coating composition precursor according to any one of the preceding claims, wherein part (A) and/or part (B), preferably part (B), further comprise at least one impact modifier.

9. The curable coating composition precursor according to any one of the preceding claims, wherein part (A) and/or part (B), preferably part (A), further comprise at least one metal salt catalyst.

10. The curable coating composition precursor according to claim 9, wherein the metal in the metal salt catalyst is selected from the group consisting of alkali, earth alkali, rare earth metals, aluminium, preferably from alkali and earth alkali, more preferably from earth alkali, even more preferably from calcium, caesium, strontium, and magnesium.

11. A method of providing a coated surface, the method comprising the following steps:
(a) Providing a curable coating composition precursor according to any one of claims 1 to 10,
(b) Combining parts (A) and (B) of the curable coating composition precursor so as to form a curable adhesive composition;
(c) Applying the curable composition to at least part of the surface of at least one substrate;
(d) Allowing the curable composition to cure.

12. The method according to claim 11, wherein curing in step (d) is a carried out at ambient temperature.

13. The method according to claim 11 or claim 12, wherein curing in step (d) is carried out in less than 5 h, preferably in less than 3.5 h, more preferably in less than 3 h, even more preferably in less than 2.5 h.

14. The method according to any one of claims 11 to 13, wherein the surface of the substrate comprises defects and/or gaps, which are filled and/or covered by the curable coating composition.

15. Use of the curable coating composition precursor according to any one of claims 1 to 10 for repairing defects in vehicle bodies, preferably car bodies.

## Patentansprüche

1. Härtbarer Beschichtungszusammensetzungs-Vorläufer, umfassend
(a) einen ersten Teil (A), umfassend:
(i) mindestens ein Diamin in einer Menge von 10 bis 50 Gew.-% bezogen auf das Gesamtgewicht von Teil (A);
(ii) mindestens einen Amin-Epoxyhärter auf der Basis eines phenolischen Lipids in einer Menge von 10 bis 50 Gew.-% bezogen auf das Gesamtgewicht von Teil (A);
(iii) mindestens ein anorganisches Füllstoffmaterial in einer Menge von 10 bis 60 Gew.-% bezogen auf die Gesamtmenge von Teil (A);
(b) einen zweiten Teil (B), umfassend:
(i) mindestens ein erstes Epoxidharz in einer Menge von 15 bis 60 Gew.-% bezogen auf die Gesamtmenge von Teil (B);
(ii) mindestens ein zweites Harz auf Epoxidbasis, das sich von dem ersten Epoxidharz unterscheidet, in einer Menge von 15 bis 60 Gew.-% bezogen auf die Gesamtmenge von Teil (B);
(iii) mindestens einen epoxidreaktiven Weichmacher in einer Menge von 0,1 bis 10 Gew.-% bezogen auf die Gesamtmenge von Teil (B);
(iv) mindestens ein anorganisches Füllstoffmaterial 5 bis 50 Gew.-%, vorzugsweise von 10 bis 45 Gew.-%, mehr bevorzugt von 15 bis 40 Gew.-% bezogen auf die Gesamtmenge von Teil (B).

2. Härtbarer Beschichtungszusammensetzungs-Vorläufer nach Anspruch 1, wobei das mindestens eine Diamin mindestens ein polymeres Diamin umfasst.

3. Härtbarer Beschichtungszusammensetzungs-Vorläufer nach Anspruch 1 oder 2, wobei das anorganische Füllstoffmaterial mindestens eine Siliciumdioxidverbindung umfasst, vorzugsweise ausgewählt der Gruppe bestehend aus Quarzglas, pyrogenem Siliciumdioxid, Perlit und beliebigen Kombinationen und Mischungen davon.

4. Härtbarer Beschichtungszusammensetzungs-Vorläufer nach einem der vorstehenden Ansprüche, wobei das mindestens eine anorganische Füllstoffmaterial in Teil (B) anorganische Mikrokugeln umfasst.

5. Härtbarer Beschichtungszusammensetzungs-Vorläufer nach einem der vorstehenden Ansprüche, wobei Phenollipid des mindestens einen Amin-Epoxy-Härtungsmittels auf Basis eines phenolischen Lipids ausgewählt ist aus Alkylcatecholen, Alkylphenolen, Alkylresorcinolen und Anacardisäuren.

6. Härtbarer Beschichtungszusammensetzungs-Vorläufer nach einem der vorstehenden Ansprüche, wobei das phenolische Lipid des mindestens einen Amin-Epoxy-Härtungsmittels auf Basis eines phenolischen Lipids ein Alkylphenol ausgewählt aus Propylphenol, Butylphenol, Amylphenol, Octylphenol, Nonylphenol, Dodecylphenol und cardanolbasierten Verbindungen ist.

7. Härtbarer Beschichtungszusammensetzungs-Vorläufer nach einem der vorstehenden Ansprüche, wobei das mindestens eine Amin-Epoxy-Härtungsmittel auf Basis eines phenolischen Lipids ein Phenalkamin ist.

8. Härtbarer Beschichtungszusammensetzungs-Vorläufer nach einem der vorstehenden Ansprüche, wobei Teil (A) und/oder Teil (B), vorzugsweise Teil (B), ferner mindestens einen Schlagzähmodifikator umfasst.

9. Härtbarer Beschichtungszusammensetzungs-Vorläufer nach einem der vorstehenden Ansprüche, wobei Teil (A) und/oder Teil (B), vorzugsweise Teil (A), ferner mindestens einen Metallsalzkatalysator umfasst.

10. Härtbarer Beschichtungszusammensetzungs-Vorläufer nach Anspruch 9, wobei das Metall in dem Metallsalzkatalysator ausgewählt ist aus der Gruppe bestehend aus Alkalimetallen, Erdalkalimetallen, Seltenerdmetallen, Aluminium, vorzugsweise aus Alkali und Erdalkali, mehr bevorzugt aus Erdalkali, noch mehr bevorzugt aus Calcium, Cäsium, Strontium und Magnesium.

11. Verfahren zum Herstellen einer beschichteten Oberfläche, wobei das Verfahren die folgenden Schritte umfasst:
(a) Bereitstellen eines härtbaren Beschichtungszusammensetzungs-Vorläufers nach einem der Ansprüche 1 bis 10,
(b) Kombinieren der Teile (A) und (B) des härtbaren Beschichtungszusammensetzungs-Vorläufers, um eine härtbare Klebstoffzusammensetzung zu bilden;
(c) Auftragen der härtbaren Zusammensetzung auf mindestens einen Teil der Oberfläche mindestens eines Substrats;
(d) Aushärtenlassen der härtbaren Zusammensetzung.

12. Verfahren nach Anspruch 11, wobei das Härten in Schritt (d) bei Umgebungstemperatur durchgeführt wird.

13. Verfahren nach Anspruch 11 oder Anspruch 12, wobei das Härten in Schritt (d) in weniger als 5 h durchgeführt wird, vorzugsweise in weniger als 3,5 h, mehr bevorzugt in weniger als 3 h, noch mehr bevorzugt in weniger als 2,5 h.

14. Verfahren nach einem der Ansprüche 11 bis 13, wobei die Oberfläche des Substrats Defekte und/oder Lücken aufweist, die von der härtbaren Beschichtungszusammensetzung gefüllt und/oder bedeckt werden sollen.

15. Verwendung des härtbaren Beschichtungszusammensetzungs-Vorläufers nach einem der Ansprüche 1 bis 10 zum Reparieren von Defekten in Fahrzeugkarosserien, vorzugsweise Autokarosserien.

## Revendications

1. Précurseur de composition de revêtement durcissable, comprenant
(a) une première partie (A) comprenant :
(i) au moins une diamine en une quantité allant de 10 à 50 % en poids sur la base du poids total de partie (A) ;
(ii) au moins un durcisseur époxy aminé basé sur un lipide phénolique en une quantité allant de 10 à 50 % en poids sur la base du poids total de partie (A) ;
(iii) au moins une matière de charge inorganique en une quantité allant de 10 à 60 % en poids sur la base de la quantité totale de partie (A) ;
(b) une deuxième partie (B) comprenant :
(i) au moins une première résine époxy en une quantité allant de 15 à 60 % en poids sur la base de la quantité totale de partie (B) ;
(ii) au moins une deuxième résine à base d'époxy distincte de la première résine époxy en une quantité allant de 15 à 60 % en poids sur la base de la quantité totale de partie (B) ;
(iii) au moins un agent assouplissant réactif à l'époxy en une quantité allant de 0,1 à 10 % en poids sur la base de la quantité totale de partie (B) ;
(iv) au moins une matière de charge inorganique de 5 à 50 % en poids, de préférence de 10 à 45 % en poids, plus préférablement de 15 à 40 % en poids b sur la base de la quantité totale de partie (B).

2. Précurseur de composition de revêtement durcissable selon la revendication 1, dans lequel l'au moins une diamine comprend au moins une diamine polymère.

3. Précurseur de composition de revêtement durcissable selon la revendication 1 ou la revendication 2, dans lequel la matière de charge inorganique comprend au moins un composé de silice, choisi de préférence parmi la silice fondue, la silice fumée, la perlite, et n'importe quelles combinaisons et n'importe quels mélanges de ceux-ci.

4. Précurseur de composition de revêtement durcissable selon l'une quelconque des revendications précédentes, dans lequel l'au moins une matière de charge inorganique dans la partie (B) comprend des microsphères inorganiques.

5. Précurseur de composition de revêtement durcissable selon l'une quelconque des revendications précédentes, dans lequel le lipide phénolique de l'au moins un agent de durcissement époxy aminé basé sur un lipide phénolique est choisi parmi des alkylcatéchols, des alkylphénols, des alkylrésorcinols et des acides anacardiques.

6. Précurseur de composition de revêtement durcissable selon l'une quelconque des revendications précédentes, dans lequel le lipide phénolique de l'au moins un agent de durcissement époxy aminé basé sur un lipide phénolique est un alkylphénol choisi parmi des composés à base de propylphénol, de butylphénol, d'amylphénol, d'octylphénol, de nonylphénol, de dodécylphénol et de cardanol.

7. Précurseur de composition de revêtement durcissable selon l'une quelconque des revendications précédentes, dans lequel l'au moins un agent de durcissement époxy aminé basé sur un lipide phénolique est une phénalkamine.

8. Précurseur de composition de revêtement durcissable selon l'une quelconque des revendications précédentes, dans lequel la partie (A) et/ou la partie (B), de préférence la partie (B), comprennent en outre au moins un modificateur d'impact.

9. Précurseur de composition de revêtement durcissable selon l'une quelconque des revendications précédentes, dans lequel la partie (A) et/ou la partie (B), de préférence la partie (A), comprennent en outre au moins un catalyseur à sel métallique.

10. Précurseur de composition de revêtement durcissable selon la revendication 9, dans lequel le métal dans le catalyseur à sel métallique est choisi dans le groupe constitué d'alcalin, alcalino-terreux, métaux des terres rares, aluminium, de préférence d'alcalin et alcalino-terreux, plus préférablement d'alcalino-terreux, même plus préférablement de calcium, césium, strontium, et magnésium.

11. Procédé de fourniture d'une surface revêtue, le procédé comprenant les étapes suivantes :
(a) fournir un précurseur de composition de revêtement durcissable selon l'une quelconque des revendications 1 à 10,
(b) combiner les parties (A) et (B) du précurseur de composition de revêtement durcissable de façon à former une composition adhésive durcissable ;
(c) appliquer la composition durcissable sur au moins une partie de la surface d'au moins un substrat ;
(d) laisser durcir la composition durcissable.

12. Procédé selon la revendication 11, dans lequel le durcissement à l'étape (d) est effectué à la température ambiante.

13. Procédé selon la revendication 11 ou la revendication 12, dans lequel le durcissement à l'étape (d) est effectué en moins de 5 h, de préférence en moins de 3,5 h, plus préférablement en moins de 3 h, encore plus préférablement en moins de 2,5 h.

14. Procédé selon l'une quelconque des revendications 11 à 13, dans lequel la surface du substrat comprend des défauts et/ou des espaces, qui sont remplis et/ou couverts par la composition de revêtement durcissable.

15. Utilisation du précurseur de composition de revêtement durcissable selon l'une quelconque des revendications 1 à 10 pour réparer des défauts dans des carrosseries de véhicule, de préférence des carrosseries de voiture.
